# EUROPÄISCHE PATENTSCHRIFT

(11) **EP 3 644 724 B1**
(45) Veröffentlichungstag und Bekanntmachung des Hinweises auf die Patenterteilung: **03.05.2023**
(21) Anmeldenummer: 18735221.6
(22) Anmeldetag: 21.06.2018
(51) Int. Cl.: A01M 7/00

(54) **VERFAHREN ZUM AUSBRINGEN EINES SPRITZMITTELS AUF EIN FELD**
METHOD OF APPLYING A PLANT PROTECTION AGENT ON A FIELD
PROCÉDÉ DE DISTRIBUTION D'UN PRODUIT DE PROTECTION DES PLANTES SUR UN CHAMP

(30) Priorität: 27.06.2017 DE 102017210804
(43) Veröffentlichungstag der Anmeldung: 06.05.2020
(73) Patentinhaber: Robert Bosch GmbH, 70442 Stuttgart (DE)
(72) Erfinder: HOUIS, Nicolas, 74321 Bietigheim-Bissingen (DE); FEHSE, Jochen, 71292 Friolzheim (DE); SCHWADERER, Peter, 72218 Wildberg (DE)
(86) Internationale Anmeldenummer: PCT/EP2018/066546
(87) Internationale Veröffentlichungsnummer: WO 2019/002077

(56) Entgegenhaltungen:
- WO-A1-97/37372
- WO-A1-99/19824
- WO-A1-2012/122988
- DE-A1- 4 132 637
- DE-A1- 19 858 168

## Beschreibung

### Stand der Technik

Die Erfindung geht aus von einem Verfahren zum Ausbringen eines Spritzmittels, insbesondere eines Pflanzenschutzmittels, auf ein Feld und ein Spritzsystem nach Gattung der unabhängigen Ansprüche. Gegenstand der vorliegenden Erfindung ist auch eine Steuereinheit und ein Computerprogramm.

In der konventionellen Landwirtschaft wird eine Vielzahl von Wirkmitteln zur Düngung, der Wachstumsunterstützung und insbesondere zum Schutz der Kulturpflanzen verwendet. Dieser Schutz richtet sich gegen Unkraut- (Herbizide), Pilz- (Fungizide), Schädlings- (Insektizide) und Krankheitsbefall. Typischerweise werden diese Mittel als wässrige Lösung mit einem hydraulischen Spritz- bzw. Spraysystem auf dem Feld ausgebracht. Bei Entdeckung von Befall wird bisher die Ausbringungsmenge durch den Nutzer mit Hilfe von Stichproben zur Art und Intensität des Befalls eingestellt und in konstanter Art und Weise auf der gesamten Fläche appliziert. Da nicht von einem gleichmäßigen Befall der Feldfläche ausgegangen werden kann, wird durch diese Vorgehensweise zu viel Wirkmittel in die Umwelt ausgebracht. Daneben könnten durch Vermeidung diese Übermenge die Betriebskosten (=Kosten Spritzmittel) der Nutzer verringert werden.

Voraussetzung für eine bedarfsgerechte Ausbringung ist eine örtlich hochaufgelöste Kenntnis von Art und Intensität des Befalls, sowie der technischen Möglichkeit die Spritzmenge variabel in Ort und Menge anzupassen. Zur Beobachtung des örtlich aufgelösten Befalls können beispielsweise vorhandene Luftaufnahmen (Satellit, Flugzeuge, UAV) verwendet werden. Eine höhere Genauigkeit ohne den Aufwand zur Erstellung von Luftaufnahmen bietet allerdings die parallele Sensierung während der Mittelaufbringung.

Sensoren zur Erkennung von pflanzlichem Grün sind bereits Stand der Technik.

Hierbei wird allerdings nicht zwischen Kulturpflanze und Unkräutern unterschieden, was vor allem bei Anwendung von selektiven Herbiziden kein Einsparungspotential ermöglicht. Optische Systeme zur Detektion und Klassifikation des Unkrautbefalls prüfen einen Bildausschnitt auf pflanzliches Grün und führen anschließend eine Klassifizierung, d.h. eine Bestimmung der Art der beobachteten Pflanze durch. Hierbei können bekannte Digitalkameras mit Objektiven, ggf. in Kombination mit lichtwellenlängenspezifischen Filtern verwendet werden. Mit der Information aus der Klassifizierung kann entsprechend des Aufkommens an Unkrautarten das jeweils wirksame Herbizid angemischt und aufgebracht appliziert werden.

Die DE 44 13 739 A1 offenbart ein Verfahren zum gezielten, spezifischen, dosierten Ausbringen von Nähr- und Pflegemitteln im Acker- oder Gartenbau. Hierbei werden die Wildpflanzen in den Reihenzwischenräume analog zu den Kulturpflanzen selektiv behandelt.

Die DE 41 32 637 C2 offenbart ein Verfahren zur gesteuerten Unkrautbekämpfung von nicht in Reihenkulturen gepflanzten, dichten Pflanzenbeständen.

Die WO 2012/122 988 A1 offenbart ein Spritzgestänge zum selektiven Sprühen einer herbiziden Zusammensetzung auf Dikotylen.

Die DE 198 58 168 A1 offenbart ein Verfahren zur berührungslosen Ermittlung des Pflanzenbewuchses eines Feldabschnitts.

### Offenbarung der Erfindung

Gegenstand der vorliegenden Erfindung ist ein Verfahren zum Ausbringen eines Spritzmittels, insbesondere eines Pflanzenschutzmittels, auf ein Feld, mit den Schritten:
- Erfassen von Pflanzen in einem Feldabschnitt des Feldes mittels einer optischen und/oder Infrarot-Erfassungseinheit;
- Identifizieren von zumindest einer Pflanzenreihe in dem erfassten Feldabschnitt;
- Definieren eines die zumindest eine Pflanzenreihe umfassenden Pflanzenbereiches und eines von dem Pflanzenbereich verschiedenen Beikrautbereiches in dem erfassten Feldabschnitt;
- Ermitteln einer Pflanzenkennzahl des Beikrautbereiches; und
- Ausbringen des Spritzmittels auf den Beikrautbereich, insbesondere den Feldabschnitt in Abhängigkeit von der ermittelten Pflanzenkennzahl mittels einer Spritzvorrichtung.

Gegenstand der vorliegenden Erfindung ist ferner ein Spritzsystem, das eingerichtet ist, um Schritte des vorangehend beschriebenen Verfahrens auszuführen.

Gegenstand der vorliegenden Erfindung sind außerdem eine Steuereinheit, welche eingerichtet ist, die Schritte dieses Verfahrens zu steuern bzw. anzusteuern, ein Computerprogramm, das dazu eingerichtet ist, die Schritte des Verfahrens zu steuern bzw. anzusteuern sowie ein maschinenlesbares Speichermedium, auf dem das Computerprogramm gespeichert ist.

Das Spritzmittel ist bevorzugt ein Pflanzenschutzmittel. Das Spritzmittel kann demnach bspw. ein Herbizid, Fungizid oder ein Insektizid sein.

Unter einem Feld kann vorliegend eine landwirtschaftlich genutzte Fläche, eine Anbaufläche für Pflanzen oder auch eine Parzelle einer solchen Fläche bzw. Anbaufläche verstanden werden. Das Feld kann somit eine Ackerfläche, ein Grünland oder eine Weide sein. Die Pflanzen können beispielsweise Nutzpflanzen, deren Frucht landwirtschaftlich genutzt wird, beispielsweise als Nahrungsmittel, Futtermittel oder als Energiepflanze, sowie Beikräuter bzw. Unkräuter umfassen.

Der Feldabschnitt kann ein Erfassungsabschnitt bzw. ein erfasster Bildabschnitt einer optischen und/oder Infrarot-Erfassungseinheit sein. Unter einer optischen Erfassungseinheit kann beispielsweise eine Kamera oder eine 3D-Kamera verstanden werden. Die optische und/oder Infrarot-Erfassungseinheit kann kalibriert sein, um z. B. die Höhenzuordnung aus erfassten Bilder zu errechnen.

Die optische und/oder Infrarot-Erfassungseinheit kann auf einer mobilen Einheit angeordnet sein, wobei die mobile Einheit insbesondere als Landfahrzeug und/oder Luftfahrzeug und/oder als Anhänger ausgebildet sein kann.

Unter einem Erfassen von Pflanzen kann beispielsweise das Bestimmen des Vorhandenseins von Pflanzen in dem Feldabschnitt verstanden werden, insbesondere ohne dass dabei eine Klassifizierung der Pflanzen erfolgt. Der Schritt des Erfassens von Pflanzen kann ein Erfassen eines Farbanteils, insbesondere eines grünen Farbanteils und/oder eines Infrarotanteils in dem Feldabschnitt bzw. Bildabschnitt umfassen. Hierbei können mittels der optischen und/oder Infrarot-Erkennungseinheit, bspw. anhand eines vorbestimmten NDVI-Wertes (Normalized Differenced Vegetation Index, er wird aus Reflexionswerten im nahen infraroten und sichtbaren roten Wellenlängenbereich des Lichtspektrums gebildet) Pflanzen erfasst werden, indem Biomasse vom (Erd-) Boden unterschieden wird.

Der Schritt des Erfassens kann bspw. während einer Überfahrt einer mobilen Einheit, welche die optische und/oder Infrarot-Erfassungseinheit aufweist, über dem Feld erfolgen, wobei die Pflanzen in dem Feldabschnitt bzw. erfassten Bildabschnitt der optischen und/oder Infrarot-Erfassungseinheit gleichzeitig erfasst werden.

Die Pflanzenreihen erstrecken sich im Wesentlichen geradlinig. Somit kann die Identifizierung einer Pflanzenreihe beispielsweise durch Einpassung einer Geraden bzw. einer geradlinigen Pflanzenreihenmittelpunktlinie in eine Bildtrajektorie mit dem höchsten grünen Farbanteil bzw. Grünwert erfolgen. In dem Schritt des Identifizierens werden bevorzugt alle Pflanzenreihen in dem erfassten Feldabschnitt identifiziert.

Der Pflanzenbereich kann die Pflanzen der Pflanzenreihe vollständig umfassen. Der Pflanzenbereich kann jedoch auch die Pflanzenreihe umfassen, ohne dass die einzelnen Pflanzen der Pflanzenreihe vollständig umfasst sind. Demnach kann der Pflanzenbereich die einzelnen Pflanzen der Pflanzenreihe auch nur teilweise umfassen. Der Pflanzenbereich kann um die jeweilige Pflanzenreihenmittelpunktlinie definiert werden, bspw. mit einer konstanten bzw. definierten oder einer variablen Breite. Der Pflanzenbereich kann jedoch auch die Pflanzenreihenmittelpunktlinie selbst sein.

Der Beikrautbereich erstreckt sich bevorzugt zwischen den Pflanzenreihen. Der Beikrautbereich kann ein Restbereich des Feldabschnitts sein, welcher sich nach der Definition des Pflanzenbereiches ergibt.

Die Pflanzenkennzahl kann einen Bedeckungsgrad des Beikrautbereiches von pflanzlichem Material und/oder eine Menge an pflanzlichem Material in dem Beikrautbereich und/oder eine Anzahl an Pflanzen in dem Beikrautbereich repräsentieren bzw. sein. Der Bedeckungsgrad ist über das Verhältnis von durch pflanzlichem Material bedeckter Fläche zu Gesamtfläche definiert. Der Bedeckungsgrad ist demnach das Verhältnis des bewachsenen Bereiches im Beikrautbereich zum gesamten Beikrautbereich. Dazu kann die Anzahl der Pixel in dem erfassten Bild bestimmt werden, an denen pflanzliches Material detektiert wird. Demnach kann mittels der Pflanzenkennzahl eine Maßzahl für den Befall abgeleitet werden, in Abhängigkeit derer entschieden wird, ob und ggf. wie der Beikrautbereich behandelt wird.

Der Schritt des Ausbringens kann ein Vergleichen der ermittelten Pflanzenkennzahl mit einem Schwellwert umfassen, wobei bei Erreichen, Unterschreiten oder Überschreiten des Schwellwerts der Schritt des Ausbringens ausgeführt wird. Der Schwellwert kann manuell eingebbar sein. In Abhängigkeit der Kultur im Feld, des Wachstumsstadiums und des verwendeten Pflanzenschutzmittels kann hierbei eine sog. Spritzregel hinterlegt sein, d.h. ein Zusammenhang zwischen einer bestimmten Pflanzenkennzahl und der Entscheidung, ob und wieviel Pflanzenschutzmittel appliziert werden soll. Als Beispiel könnte die Regel lauten: "Wenn der Bedeckungsgrad im Beikrautbereich >5%, dann wird appliziert".

Die Schritte des Identifizierens, des Definierens und des Ermittelns können mittels einer Rechnereinheit durchgeführt werden.

Die Spritzvorrichtung kann eine Vielzahl von Düsen und Flüssigkeitstanks umfassen. Die Spritzvorrichtung kann auf einer mobilen Einheit angeordnet sein, wobei die mobile Einheit insbesondere als Landfahrzeug und/oder Luftfahrzeug und/oder Anhänger ausgebildet sein kann. Die Spritzvorrichtung kann auf derselben mobilen Einheit wie die Erfassungseinheit angeordnet sein. Das Ausbringen kann kontinuierlich bzw. mit einem spezifischen Ausbringmuster erfolgen.

Durch das erfindungsgemäße Verfahren ist es nunmehr möglich, auf sehr einfache und ressourcensparende Art und Weise ein Feld bedarfsgerecht zu behandeln. Hierbei ist vorteilhafterweise keine Klassifizierung der Pflanzen bzw. Pflanzenobjekte notwendig. Stattdessen macht sich die Erfindung die Tatsache zunutze, dass die Kulturpflanzen in Pflanzreihen angebaut werden und die Bei- bzw. Unkräuter und Ungräser ungleichmäßig auf dem Feld verteilt sind. Demnach werden erfindungsgemäß ein Pflanzenbereich mit der Pflanzenreihe und ein Beikrautbereich definiert, wobei per Definition alle Pflanzen in dem Pflanzenbereich als Kulturpflanzen und alle Pflanzen in dem Beikrautbereich als zu behandelnde Pflanzen, insbesondere Beikräuter bzw. Unkräuter angesehen werden. Das Ausbringen bzw. die Applikation des vordefinierten Spritzmittels erfolgt dann auf den Beikrautbereich, vorzugsweise auf den gesamten Feldabschnitt auf Basis einer ermittelten Pflanzenkennzahl, ohne eine Klassifizierung oder Selektion und auch unabhängig von der Anordnung der Pflanzen.

Es ist vorteilhaft, wenn in dem Schritt des Ausbringens das Spritzmittel im Wesentlichen gleichmäßig auf den Beikrautbereich ausgebracht wird. Unter einem gleichmäßigen Ausbringen kann im Rahmen der vorliegenden Erfindung ein Ausbringen mit einer vordefinierten Ausbringmenge pro Fläche verstanden werden. Unter einer vordefinierten Ausbringmenge kann eine vorab bzw. zu Beginn der Behandlung festgelegt Ausbringmenge verstanden werden. Die vordefinierte Ausbringmenge ist hierbei eine im Wesentlichen konstante Ausbringmenge pro Fläche. Die definierte Ausbringmenge kann voreingestellt bzw. vorab eingebbar sein. Hierbei wird das Spritzmittel bevorzugt flächig ausgebracht. Diese Maßnahme führt zu einer weiteren Vereinfachung des Verfahrens bzw. Gesamtsystems, da zum einen keine Regelung der Spritzmenge und zum anderen auch keine Identifizierung der Pflanzen bzw. Pflanzenpositionen erforderlich sind.

Ferner ist es vorteilhaft, wenn das Identifizieren der Pflanzenreihe unter Verwendung zumindest einer der folgenden Informationen erfolgt: Farbanteil, insbesondere grüner Farbanteil der erfassten Pflanzen, Infrarotanteil der erfassten Pflanzen, Pflanzenabstand, Pflanzreihenabstand, Wachstumsstadium der Pflanzen, Geokoordinaten einer Aussaat der Pflanzen. Mittels dieser Informationen können die Pflanzenreihen auf einfache und sichere Art und Weise identifiziert werden, da bspw. die Kulturpflanzen vom Wachstumsstadium weiter sind als die Beikräuter und Ungräser. Ebenfalls technisch sehr einfach und zuverlässig ist das Identifizieren der Pflanzenreihen unter Verwendung eines Farbanteils der Pflanzen bzw. eines erfassten Pflanzenbildes, da vorteilhafterweise bereits ausgereifte Algorithmen der Bildverarbeitung hierfür verwendet werden können.

Es ist außerdem vorteilhaft, wenn der Pflanzenbereich eine variable Breite aufweist, wobei die Breite von einem Wachstumsstadium einer in dem entsprechenden Bereich angeordneten Pflanze des Pflanzenbereiches abhängt. Eine solche Ausführungsform des hier vorgeschlagenen Ansatzes bietet den zusätzlichen Vorteil, dass das unterschiedliche Breitenwachstum der Kulturpflanzen in dem Pflanzenbereich mit berücksichtigt wird. Hierdurch wird insbesondere verhindert, dass Teile der Kulturpflanze, welche in den Beikrautbereich ragen, nicht als Beikraut gewertet werden. Dazu wird anhand des Wachstumsstadiums der Kulturpflanze ein Schlauch um den eigentlichen Pflanzreihenmittelpunkt definiert werden. Pflanzenteile/-pixel welche direkt an einem Pflanzenpixel aus dem Kulturpflanzenbereich grenzen, werden dann ebenfalls als Kulturpflanze bewertet (Nachbarschaftspixel).

Besonders vorteilhaft ist eine Ausführungsform des hier vorgeschlagenen Ansatzes, bei der im Schritt des Erfassens die optische und/oder Infrarot-Erfassungseinheit und/oder im Schritt des Ausbringens die Spritzvorrichtung auf einem Fahrzeug und/oder auf einem Luftfahrzeug angeordnet ist. Eine solche Ausführungsform bietet den Vorteil einer hoch-automatisierten und somit schnellen und zuverlässigen Behandlung eines Feldes.

Das erfindungsgemäße Verfahren kann beispielsweise in Software oder Hardware oder in einer Mischform aus Software und Hardware beispielsweise in einem Steuergerät implementiert sein. Hierzu weist das Spritzsystem erfindungsgemäß zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Daten- oder Steuersignalen an den Aktor und/oder zumindest eine Kommunikationsschnittstelle zum Einlesen oder Ausgeben von Daten auf, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele der Erfindung sind in den Zeichnungen dargestellt und in der nachfolgenden Beschreibung näher erläutert. Es zeigt:
- Fig. 1: eine schematische Darstellung eines erfindungsgemäße Spritzsystems;
- Fig. 2: eine schematische Darstellung eines erfassten Feldabschnitts; und
- Fig. 3: ein Ablaufdiagramm eines Verfahrens gemäß einem Ausführungsbeispiel.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

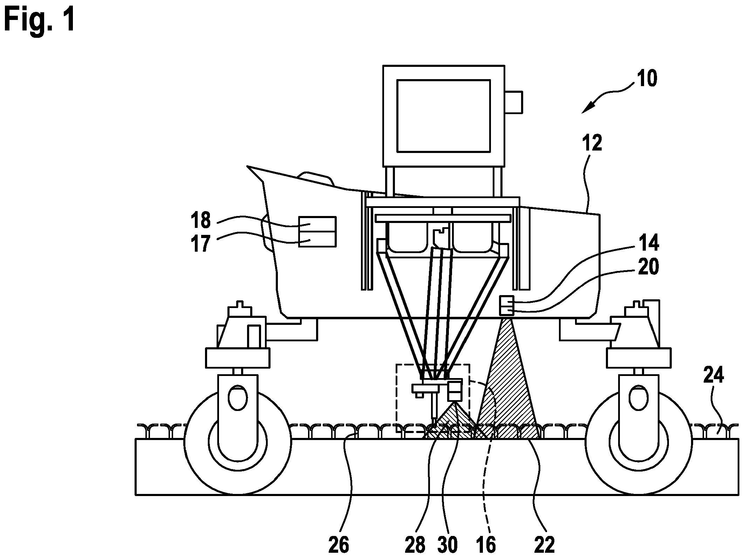

Fig. 1 zeigt ein erfindungsgemäßes Spritzsystem 10. Das Spritzsystem 10 weist ein mobiles Landfahrzeug 12 auf. Das Spritzsystem 10 weist ferner eine Erfassungseinheit 14 und eine Spritzvorrichtung 16 auf. Die Erfassungseinheit 14 und die Spritzvorrichtung 16 sind an dem Landfahrzeug 12 angeordnet. Das Spritzsystem 10 weist außerdem eine Rechnereinheit 17 und eine Steuereinheit 18 auf.

Die Erfassungseinheit 14 ist als optische Erfassungseinheit 14 bzw. optische Kamera 14 ausgebildet. Die optische Kamera 14 umfasst eine Filtereinheit 20, um einen Farbanteil wie beispielsweise den grünen Farbanteil eines von der optischen Kamera 16 erfassten Bildes eines Feldabschnitts 22 eines Feldes 24 zu extrahieren, um Pflanzen 26 zu erfassen.

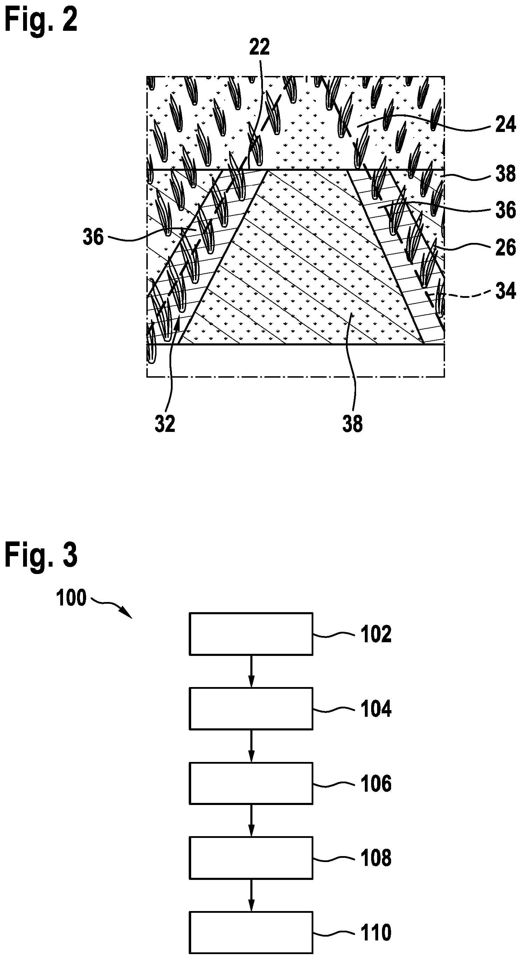

Wie anhand der Fig. 2 nachfolgend näher erläutert wird, ist die Rechnereinheit 17 ausgebildet, zumindest eine Pflanzenreihe in dem erfassten Feldabschnitt 22 bzw. dem erfassten Bild des Feldabschnitts 22, bspw. anhand des erfassten grünen Farbanteils zu identifizieren, einen die zumindest eine identifizierte Pflanzenreihe umfassenden Pflanzenbereich und einen von dem Pflanzenbereich verschiedenen Beikrautbereich in dem erfassten Feldabschnitt 22 zu definieren und ferner eine Pflanzenkennzahl des Beikrautbereiches zu ermitteln. Die Pflanzenkennzahl ist hierbei der Bedeckungsgrad des Beikrautbereiches von pflanzlichem Material.

Die Steuereinheit 18 ist wiederum eingerichtet, die Spritzvorrichtung 14 entsprechend in Abhängigkeit von der ermittelten Pflanzenkennzahl anzusteuern. Hierbei erfolgt ein Vergleich der ermittelten Pflanzenkennzahl mit einem Schwellwert, wobei bei Erreichen bzw. Überschreiten des Schwellwerts die Spritzvorrichtung 14 entsprechend angesteuert bzw. aktiviert wird.

Die Spritzvorrichtung 14 ist schließlich ausgebildet, ein Spritzmittel 28 bzw. ein Pflanzenschutzmittel 28 mittels einer Düse 30 auf den Beikrautbereich, insbesondere den Feldabschnitt 22 zur Behandlung der Pflanzen 26 abzugeben.

Fig. 2 zeigt eine Schrägansicht des Feldes 24, wobei auch eine direkte Aufsicht denkbar wäre. Hierbei ist ein mittels der optischen Erfassungseinheit 14 des Spritzsystems 10 erfasster Feldabschnitt 22 des Feldes 24 gekennzeichnet. Es ist ersichtlich, dass nach dem Erfassen der Pflanzen 26 bzw. des grünen Farbanteils in dem Feldabschnitt 22 mittels der Rechnereinheit 17 Pflanzenreihen 32 identifiziert wurden. Die Identifizierung der Pflanzenreihen 32 ist durch Einpassung von geradliniger Pflanzenreihenmittelpunktlinien 34 in Bildtrajektorien mit dem höchsten grünen Farbanteil bzw. Grünwert erfolgt.

Wie weiter aus Fig. 2 ersichtlich ist, wurde ein Pflanzenbereich 36, welcher die Pflanzenreihen 32 umfasst, definiert. Der Pflanzenbereich 36 wurde unter Verwendung des erfassten grünen Farbanteils definiert. Der Pflanzenbereich 36 kann auch eine variable Breite aufweisen, welche von einem Wachstumsstadium einer in dem entsprechenden Bereich angeordneten Pflanze 26 des Pflanzenbereiches 36 abhängt.

Des Weiteren wurde ein Beikrautbereich 38 definiert, welcher verschieden von dem Pflanzenbereich 36 ist. Der Beikrautbereich 38 ist zwischen den Pflanzenreihen 32 angeordnet. Der Beikrautbereich 38 ist hierbei der Bereich, welcher per Definition nur Beikräuter aufweist. Der Beikrautbereich 38 ist der Restbereich des Feldabschnitts 22 abzüglich des Pflanzenbereiches 36, d.h. der restliche Bereich, welcher nach der Definition des Pflanzenbereiches 36 in dem Feldabschnitt 22 bzw. dem erfassten Bild des Feldabschnitts 22 übrig bleibt.

Ob und/oder wie der Feldabschnitt 22 behandelt werden soll, wird schließlich in Abhängigkeit von Beikrautbefall des Beikrautbereiches 38 entschieden. Hierfür wird die Pflanzenkennzahl ermittelt, welche den Bedeckungsgrad des Beikrautbereiches 38 von pflanzlichem Material repräsentiert. Erreicht bzw. überschreitet die Pflanzenkennzahl einen vordefinierten Schwellwert, so erfolgt ein Ausbringen des Spritzmittels 28 auf Feldabschnitt 22 mittels der Spritzvorrichtung 16, um den Feldabschnitt 22 bzw. die Pflanzen 26 in dem Feldabschnitt 22 zu behandeln.

Fig. 3 zeigt ein Ablaufdiagramm eines Ausführungsbeispiels des hier vorgestellten Ansatzes als Verfahren 100 zum Ausbringen eines Spritzmittels 28, insbesondere eines Pflanzenschutzmittels 28, auf ein Feld 24. Das Verfahren 100 umfasst einen Schritt 102 des Erfassens von Pflanzen 26 in einem Feldabschnitt 22 des Feldes 24 mittels einer optischen und/oder Infrarot-Erfassungseinheit 14. Das Verfahren 100 umfasst ferner einen Schritt 104 des Identifizierens von zumindest einer Pflanzenreihe 32 in dem Feldabschnitt 22. Das Verfahren 100 umfasst außerdem einen Schritt 106 des Definierens eines die zumindest eine identifizierte Pflanzenreihe 32 umfassenden Pflanzenbereiches 36 und eines von dem Pflanzenbereich 36 verschiedenen Beikrautbereiches 38 in dem erfassten Feldabschnitt 22. Das Verfahren 100 umfasst des Weiteren einen Schritt 108 des Ermittelns einer Pflanzenkennzahl des Beikrautbereiches 38. Das Verfahren 100 umfasst schließlich einen Schritt 110 des Ausbringens des Spritzmittels 28 auf den Beikrautbereich 38, insbesondere den Feldabschnitt 22 in Abhängigkeit von der ermittelten Pflanzenkennzahl mittels einer Spritzvorrichtung 16.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren zum Ausbringen eines Spritzmittels (28), insbesondere eines Pflanzenschutzmittels (28), auf ein Feld (24), mit den Schritten:
- Erfassen (102) von Pflanzen (26) in einem Feldabschnitt (22) des Feldes (24) mittels einer optischen und/oder Infrarot-Erfassungseinheit (14);
- Identifizieren (104) von zumindest einer Pflanzenreihe (32) in dem erfassten Feldabschnitt (22) mittels einer Rechnereinheit;
- Definieren (106) eines die zumindest eine identifizierte Pflanzenreihe (32) umfassenden Pflanzenbereiches (36) und eines von dem Pflanzenbereich (36) verschiedenen Beikrautbereiches (38) in dem erfassten Feldabschnitt (22) mittels der Rechnereinheit;
- Ermitteln (108) einer Pflanzenkennzahl des Beikrautbereiches (38) mittels der Rechnereinheit; und
- Ausbringen (110) des Spritzmittels (28) auf den Beikrautbereich (38), insbesondere auf den Feldabschnitt (22), in Abhängigkeit von der ermittelten Pflanzenkennzahl mittels einer Spritzvorrichtung (16).

2. Verfahren (100) nach Anspruch 1, **dadurch gekennzeichnet, dass** die Pflanzenkennzahl einen Bedeckungsgrad des Beikrautbereiches (38) von pflanzlichem Material und/oder eine Menge an pflanzlichem Material in dem Beikrautbereich (38) und/oder eine Anzahl an Pflanzen (26) in dem Beikrautbereich (38) repräsentiert.

3. Verfahren (100) nach Anspruch 1 oder 2, **dadurch gekennzeichnet, dass** der Schritt (110) des Ausbringens ein Vergleichen der ermittelten Pflanzenkennzahl mit einem Schwellwert umfasst, wobei bei Erreichen, Unterschreiten oder Überschreiten des Schwellwerts der Schritt (110) des Ausbringens ausgeführt wird.

4. Verfahren (100) nach einem der vorhergehenden Ansprüche, **dadurch gekennzeichnet, dass** in dem Schritt (110) des Ausbringens das Spritzmittel (28) im Wesentlichen gleichmäßig auf den Beikrautbereich (38), insbesondere auf den Feldabschnitt (22) ausgebracht wird.

5. Verfahren (100) nach einem der vorhergehenden Ansprüche, **dadurch gekennzeichnet, dass** das Identifizieren der Pflanzenreihe (104) unter Verwendung zumindest einer der folgenden Informationen erfolgt: Farbanteil, insbesondere grüner Farbanteil der erfassten Pflanzen (26), Infrarotanteil der erfassten Pflanzen (26), Pflanzenabstand, Pflanzreihenabstand, Wachstumsstadium der Pflanzen (26), Geokoordinaten einer Aussaat der Pflanzen (26).

6. Verfahren (100) nach einem der vorhergehenden Ansprüche, **dadurch gekennzeichnet, dass** in dem Schritt (104) des Identifizierens alle Pflanzenreihen (32) in dem erfassten Feldabschnitt (22) identifiziert werden.

7. Verfahren (100) nach einem der vorhergehenden Ansprüche, **dadurch gekennzeichnet, dass** der Pflanzenbereich (36) um eine Pflanzenreihenmittelpunktlinie definiert wird.

8. Verfahren (100) nach einem der vorhergehenden Ansprüche, **dadurch gekennzeichnet, dass** der Pflanzenbereich (36) unter Verwendung von Nachbarschaftspixeln der erfassten Pflanzen (26) des Pflanzenbereiches (36) definiert wird.

9. Verfahren (100) nach einem der vorhergehenden Ansprüche, **dadurch gekennzeichnet, dass** der Pflanzenbereich (36) eine variable Breite aufweist, wobei die Breite von einem Wachstumsstadium einer in dem entsprechenden Bereich angeordneten Pflanze (26) des Pflanzenbereiches (36) abhängt.

10. Verfahren (100) nach einem der vorhergehenden Ansprüche, **dadurch gekennzeichnet, dass** die identifizierte Pflanzenreihe (32) sich im Wesentlichen geradlinig erstreckt.

11. Verfahren (100) nach einem der vorhergehenden Ansprüche, **dadurch gekennzeichnet, dass** im Schritt (102) des Erfassens die Pflanzen (26) unter Verwendung eines Farbanteils, insbesondere eines grünen Farbanteils und/oder eines Infrarotanteils erfasst werden.

12. Verfahren (100) nach einem der vorhergehenden Ansprüche, **dadurch gekennzeichnet, dass** im Schritt des Erfassens (102) die optische und/oder Infrarot-Erfassungseinheit (14) und/oder im Schritt (110) des Ausbringens die Spritzvorrichtung (16) an einem Landfahrzeug (12) und/oder an einem Luftfahrzeug und/oder an einem Anhänger angeordnet ist.

13. Spritzsystem, das eingerichtet ist, um Schritte des Verfahrens (100) nach einem der vorhergehenden Ansprüche in entsprechenden Einheiten auszuführen.

14. Steuereinheit, welche eingerichtet ist, die Schritte des Verfahrens (100) nach einem der Ansprüche 1 bis 12 zu steuern.

15. Computerprogramm, das dazu eingerichtet ist, die Schritte des Verfahrens (100) nach einem der Ansprüche 1 bis 12 zu steuern.

16. Maschinenlesbares Speichermedium, auf dem das Computerprogramm nach Anspruch 15 gespeichert ist.

## Claims

1. Method for applying a spray (28), in particular a plant protection agent (28), onto a field (24), having the following steps:
- acquiring (102) plants (26) in a field section (22) of the field (24) by means of an optical and/or infrared acquisition unit (14);
- identifying (104) at least one plant row (32) in the acquired field section (22) by means of a processor unit;
- defining (106) a plant region (36) comprising the at least one identified plant row (32) and a weed region (38) different from the plant region (36) in the acquired field section (22) by means of the processor unit;
- ascertaining (108) a plant parameter of the weed region (38) by means of the processor unit; and
- applying (110) the spray (28) to the weed region (38), in particular to the field section (22), in dependence on the ascertained plant parameter by means of a spraying device (16).

2. Method (100) according to Claim 1, **characterized in that** the plant parameter represents a degree of coverage of the weed region (38) by vegetable material and/or a quantity of vegetable material in the weed region (38) and/or a number of plants (26) in the weed region (38).

3. Method (100) according to Claim 1 or 2, **characterized in that** the step (110) of application comprises a comparison of the ascertained plant parameter to a threshold value, wherein the step (110) of application is executed upon reaching, falling below, or exceeding the threshold value.

4. Method (100) according to any one of the preceding claims, **characterized in that**, in the step (110) of application, the spray (28) is applied essentially uniformly onto the weed region (38), in particular onto the field section (22).

5. Method (100) according to any one of the preceding claims, **characterized in that** the identification of the plant row (104) is performed using at least one of the following items of information: color component, in particular green color component of the acquired plants (26), infrared component of the acquired plants (26), plant spacing, plant row spacing, growth stage of the plants (26), geo-coordinates of a sowing of the plants (26).

6. Method (100) according to any one of the preceding claims, **characterized in that**, in the step (104) of identification, all plant rows (32) in the acquired field section (22) are identified.

7. Method (100) according to any one of the preceding claims, **characterized in that** the plant region (36) is defined around a plant row center point line.

8. Method (100) according to any one of the preceding claims, **characterized in that** the plant region (36) is defined using neighboring pixels of the acquired plants (26) of the plant region (36).

9. Method (100) according to any one of the preceding claims, **characterized in that** the plant region (36) has a variable width, wherein the width is dependent on a growth stage of a plant (26) of the plant region (36) arranged in the corresponding region.

10. Method (100) according to any one of the preceding claims, **characterized in that** the identified plant row (32) extends essentially linearly.

11. Method (100) according to any one of the preceding claims, **characterized in that**, in the step (102) of acquisition, the plants (26) are acquired using a color component, in particular a green color component and/or an infrared component.

12. Method (100) according to any one of the preceding claims, **characterized in that**, in the step of acquisition (102), the optical and/or infrared acquisition unit (14) and/or, in the step (110) of application, the spraying device (16) is arranged on a land vehicle (12) and/or on an aircraft and/or on a trailer.

13. Spraying system which is configured to execute steps of the method (100) according to any one of the preceding claims in corresponding units.

14. Control unit which is configured to control the steps of the method (100) according to any one of Claims 1 to 12.

15. Computer program which is configured to control the steps of the method (100) according to any one of Claims 1 to 12.

16. Machine-readable storage medium, on which the computer program according to Claim 15 is stored.

## Revendications

1. Procédé d'épandage d'un produit à pulvériser (28), notamment d'un produit phytosanitaire (28), sur un champ (24), comprenant les étapes suivantes :
- acquisition (102) de plantes (26) dans une portion de champ (22) du champ (24) au moyen d'une unité d'acquisition (14) optique et/ou à infrarouges ;
- identification (104) d'au moins une rangée de plantes (32) dans la portion de champ (22) acquise au moyen d'une unité de calcul ;
- définition (106) d'une zone de plantes (36) comprenant l'au moins une rangée de plantes (32) identifiée et d'une zone de mauvaises herbes (38), différente de la zone de plantes (36), dans la portion de champ (22) acquise au moyen de l'unité de calcul ;
- détermination (108) d'un indice de plantes de la zone de mauvaises herbes (38) au moyen de l'unité de calcul ; et
- épandage (110) du produit à pulvériser (28) sur la zone de mauvaises herbes (38), notamment sur la portion de champ (22), au moyen d'un dispositif de pulvérisation (16), en fonction de l'indice de plantes déterminé.

2. Procédé (100) selon la revendication 1, **caractérisé en ce que** l'indice de plantes représente un taux de couverture de la zone de mauvaises herbes (38) par du matériel végétal et/ou une quantité de matériel végétal dans la zone de mauvaises herbes (38) et/ou un nombre de plantes (26) dans la zone de mauvaises herbes (38).

3. Procédé (100) selon la revendication 1 ou 2, **caractérisé en ce que** l'étape (110) d'épandage comprend une comparaison de l'indice de plantes déterminé avec une valeur de seuil, l'étape (110) d'épandage étant exécutée dans le cas où la valeur de seuil est atteinte, franchie vers le bas ou franchie vers le haut.

4. Procédé (100) selon l'une des revendications précédentes, **caractérisé en ce que** dans l'étape (110) d'épandage, le produit phytosanitaire (28) est épandu essentiellement de manière régulière sur la zone de mauvaises herbes (38), notamment sur la portion de champ (22) .

5. Procédé (100) selon l'une des revendications précédentes, **caractérisé en ce que** l'identification de la rangée de plantes (104) est effectuée en utilisant au moins l'une des informations suivantes : part de couleur, notamment part de couleur verte des plantes (26) acquises, part d'infrarouges des plantes (26) acquises, écart entre les plantes, écart entre les rangées de plantes, stade de croissance des plantes (26), coordonnées géographiques d'un semis des plantes (26).

6. Procédé (100) selon l'une des revendications précédentes, **caractérisé en ce que** dans l'étape (104) d'identification, toutes les rangées de plantes (32) dans la portion de champ (22) acquises sont identifiées.

7. Procédé (100) selon l'une des revendications précédentes, **caractérisé en ce que** la zone de plantes (36) est définie autour d'une ligne médiane de rangée de plantes.

8. Procédé (100) selon l'une des revendications précédentes, **caractérisé en ce que** la zone de plantes (36) est définie en utilisant des pixels de voisinage des plantes (26) acquises de la zone de plantes (36).

9. Procédé (100) selon l'une des revendications précédentes, **caractérisé en ce que** la zone de plantes (36) présente une largeur variable, la largeur dépendant d'un stade de croissance d'une plante (26) de la zone de plantes (36) qui est disposée dans la zone correspondante.

10. Procédé (100) selon l'une des revendications précédentes, **caractérisé en ce que** la rangée de plantes (32) identifiée s'étend sensiblement en ligne droite.

11. Procédé (100) selon l'une des revendications précédentes, **caractérisé en ce qu'**à l'étape (102) d'acquisition, les plantes (26) sont acquises en utilisant une part de couleur, notamment une part de couleur verte et/ou une part d'infrarouges.

12. Procédé (100) selon l'une des revendications précédentes, **caractérisé en ce qu'**à l'étape d'acquisition (102), l'unité d'acquisition (14) optique et/ou d'infrarouges, ou à l'étape (110) d'épandage, le dispositif de pulvérisation (16) est disposé(e) sur un véhicule terrestre (12) et/ou sur un véhicule aérien et/ou sur une remorque.

13. Système de pulvérisation, qui est conçu pour exécuter les étapes du procédé (100) selon l'une des revendications précédentes dans des unités correspondantes.

14. Unité de commande, qui est conçue pour commander les étapes du procédé (100) selon l'une des revendications 1 à 12.

15. Programme informatique, qui est conçu pour commander les étapes du procédé (100) selon l'une des revendications 1 à 12.

16. Support d'enregistrement lisible par machine, sur lequel est enregistré un programme informatique selon la revendication 15.
